# EUROPÄISCHE PATENTSCHRIFT

(11) **EP 2 151 618 B1**
(45) Veröffentlichungstag und Bekanntmachung des Hinweises auf die Patenterteilung: **28.10.2015**
(21) Anmeldenummer: 09163546.6
(22) Anmeldetag: 24.06.2009
(51) Int. Cl.: F16L 59/02, F16L 59/16

(54) **Vorrichtung zur Isolierung eines Rohrleitungssystems**
Device for isolating a conduit system
Dispositif d'isolation d'un système de conduite

(30) Priorität: 06.08.2008 DE 202008010465 U
(43) Veröffentlichungstag der Anmeldung: 10.02.2010
(73) Patentinhaber: GWK Kuhlmann GmbH, 33154 Salzkotten (DE)
(72) Erfinder: Kuhlmann, Fred, 33154 Salzlotten (DE)
(74) Vertreter: Ostermann, Thomas

(56) Entgegenhaltungen:
- EP-A1- 0 340 123
- DE-A1- 3 043 450
- US-A- 2 894 538
- US-A- 2 980 568
- US-A- 3 377 463
- US-A- 3 677 303
- US-A- 3 804 438
- US-A- 4 287 245

## Beschreibung

Die Erfindung betrifft eine Vorrichtung zur Isolierung einerRohrleitung nach dem Oberbegriff des Patentanspruchs 1. Aus der EP 1 279 883 B1 ist ein mehrschichtiges Dämmmaterial zur Isolierung von Rohrleitungen für Solarkollektoren bekannt, das eine wenigstens einlagige Innenschale aus einem temperaturbeständigen Elastomerschaum und eine wenigstens einlagige Außenschale aus einem Polyethylenschaum mit einer im Vergleich zur Innenschalen geringeren Temperaturbeständigkeit aufweist. Die Außenschale ist kaschierfähig ausgebildet und von einer wasserdichten, außenwitterungsbeständigen und reißfesten Folie umschlossen. In die Folie ist zur Erhöhung der Reißfestigkeit ein Gitternetzwerk integriert. Die radiale Stärke der Innenschale ist gleich oder größer der radialen Stärke der Außenschale. Die Außenschale wird aus einem im Wesentlichen ebenen Plattenmaterial zu einem Schlauch umgeformt und mit dem Innenteil über eine Wärmefixierung ohne Zusatzwerkstoffe wie Klebefolien, Kaschierpulver oder dergleichen verbunden. Nachteilig an dem bekannten Dämmmaterial für Rohrleitungen ist, dass eine Dämmung von Flanschen und Armaturen, die zusammen mit den Rohrleitungen ein Rohrleitungssystem bilden, nicht vorgesehen ist. Derartige Flansche und Armaturen bleiben entweder ungedämmt oder müssen aufwendig manuell isoliert werden. Ferner ist die Montage des Dämmschlauchs aufwendig beziehungsweise nach dem Verbauen der Rohrleitung nicht mehr möglich.

Aus der DE 30 43 450 A1 ist eine erdverlegte Rohrleitung für Fernheizungen bekannt, die durch Rohrleitungsdämmkörper umgeben ist. Rohrleitungen werden an ihren Stirnenden miteinander verschweißt und mit entsprechendem Rohrleitungsdämmmaterial in diesem Verbindungsbereich umgeben. Eine Überlappung von verschiedenen Dämmkörpern ist nicht vorgesehen.

Aus der EP 0 340 123 A1 ist eine Vorrichtung zur Isolierung eines Rohrleitungssystems bekannt, wobei eine Rohrleitung in axialer Richtung zueinander anschließenden Rohrleitungsdämmkörpern und Verbindungsdämmkörpern aufweist. Damit eine in Rohrleitungsrichtung durchgehende Dämmung erzielt wird, müssen die Rohrleitungs- und Verbindungsdämmkörper dicht aneinander montiert werden. Dies ist jedoch mit einem erhöhten Aufwand verbunden.

Aufgabe der vorliegenden Erfindung ist es daher, eine Vorrichtung zur Isolierung einer Rohrleitung mit darin vorgesehenen Flanschen derart weiterzubilden, dass die Isolierung besonders montagefreundlich vorgenommen werden kann.

Zur Lösung dieser Aufgabe weist die Erfindung die Merkmale des Patentanspruchs 1 auf.

Der besondere Vorteil der Erfindung besteht darin, dass neben den Rohrleitungen auch Armaturen, Flansche und andere Anbauteile eines Rohrleitungssystems isoliert werden können. Indem die Dämmkörper nach dem Baukastenprinzip dimensioniert und in einer Vielzahl aufeinander abgestimmter Größen bereitgestellt werden, ist die Isolierung ganzer Rohrleitungssysteme für Heim- und Handwerker in sehr einfacher Weise mit wenig Aufwand möglich. Die Dämmkörper können hierbei aus einer Mehrzahl ineinander gelegter Schalen bestehen. Hierdurch können Rohrleitungen unterschiedlicher Durchmesser beziehungsweise Flansche und Armaturen unterschiedlicher Bauart gedämmt werden. Insgesamt reduziert sich mit der Isolierung des gesamten Rohrleitungssystems der Energieverbrauch, so dass sich für den Benutzer Kostenvorteile und darüber hinaus eine Entlastung der Umwelt realisieren lassen. Nach der Erfindung umschließt der Verbindungsdämmkörper die Armaturen und/oder Flansche zumindest abschnittsweise und liegt zumindest bereichsweise an der äußeren Mantelfläche des Rohrleitungsdämmkörpers an. Durch diese Überlappung vereinfacht sich die Montage des Verbindungsdämmkörpers, da er nicht auf die individuelle Geometrie von Armaturen und/oder Flanschen angepasst werden muss. Eine Befestigung des Verbindungsdämmkörpers ist in dem Bereich, der an der äußeren Mantelfläche des Rohrleistungsdämmkörpers anliegt, sehr einfach möglich.

Nach einer Weiterbildung der Erfindung kann der Rohrleitungsdämmkörper und/oder der Verbindungsdämmkörper Durchlässe für Bedien- und/oder Anzeigeelement aufweisen. Bedien- und/oder Anzeigeelemente sind Teil einer Armatur und müssen dem Nutzer zugänglich beziehungsweise für diesen einsehbar sein. Indem die Dämmkörper Durchlässe für Bedien- und/oder Anzeigeelemente bieten, kann für diese die Isolierung ausgespart werden. Die restliche Armatur wird mit dem Dämmkörper isoliert, so dass auch hier die Wärmeverluste reduziert werden.

Nach einer Weiterbildung der Erfindung ist zur Isolierung eines Rohrbogens ein gebogener Rohrleitungsdämmkörper mit Stirnflächen vorgesehen. Eine erste Stirnfläche des gebogenen Rohrleitungsdämmkörpers liegt flächig an einer Stirnfläche eines ersten benachbarten Rohrleitungsdämmkörpers und eine zweite Stirnfläche des gebogenen Rohrleitungsdämmkörpers liegt flächig an einer Stirnfläche eines zweiten benachbarten Rohrleitungsdämmkörpers an. Die beiden benachbarten Rohrleitungsdämmkörper sind hierbei in einem Winkel zueinander vorgesehen. Der Außendurchmesser des gebogenen Rohrleitungsdämmkörper entspricht den Außendurchmessern der beiden benachbarten Rohrleitungsdämmkörper. Indem die gebogenen Rohrleitungsdämmkörper zwischen die benachbarten Rohrleitungsdämmkörper gesetzt werden, wird der hierfür erforderliche Bauraum begrenzt, so dass auch kleine Radien sehr gut isoliert werden können. Ferner können die Durchmesserstufen, die für gerade Rohrleitungsdämmkörper vorgesehen sind, übernommen werden. Hierdurch ist es möglich, gebogene Rohrleitungen mit Dämmkörpern zu isolieren, die Bestandteil des Baukastens sind.

Nach der Erfindung ist der Rohrleitungsdämmkörper und der Verbindungsdämmkörper zweistückig ausgebildet und weist zwei symmetrische Halbschalen auf. Die Zweistückigkeit der Dämmkörper vereinfacht die Montage, da die zwei Halbschalen radial auf die Rohrleitung, die Armatur oder den Flansch aufgesetzt werden können. Auf ein Aufziehen des Dämmkörpers auf die Rohrleitung in axialer Richtung kann verzichtet werden, so dass auch bestehende Rohrleitungssysteme nachträglich gut isoliert werden können. Indem die Halbschalen symmetrisch ausgebildet sind, reduziert sich die Anzahl der im Baukasten vorzusehenden Bauelemente. Hierdurch sinken der Fertigungsaufwand, die Herstellungskosten sowie der Lager- und Bereitstellungsaufwand beim Hand- oder Handwerker. Ferner vereinfacht sich die Montage, da sich durch die Verwendung von Gleichteilen die Gefahr der Verwendung falscher Bauteile reduziert.

Nach einer Weiterbildung der Erfindung sind die Dämmkörper diffusionsdicht ausgebildet. Ferner können die Stoß- und Schnittkanten der Dämmkörper mit Hilfe von Aluminiumklebestreifen diffusionsdicht verarbeitet werden. Die diffusionsdichte Isolierung von Rohrleitungssystemen beugt beispielsweise Schäden durch Tauwasserbildung an der Anlage und der sie umgebenden Bauteile und Gebäude vor.

Nach einer Weiterbildung der Erfindung können zum Fixieren der Dämmkörper dieselben umfassende Spannringe oder Spannverschlüsse verwendet werden. Die Verwendung von Spannringen und -verschlüssen ist ohne weitere Vorkenntnisse einfach möglich. Darüber hinaus erlaubt es dieses Verschlusssystem, die Dämmkörper beliebig oft anzubringen und wieder zu entfernen, um beispielsweise eine Armatur zu warten.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: einen Längsschnitt durch einen Teilbereich eines isolierten Rohrleitungssystems mit Flansch,
- Figur 2: einen Schnitt A-A des isolierten Rohrleitungssystems nach Figur 1,
- Figur 3: einen Längsschnitt durch einen zweiten Teilbereich eines isolierten Rohrleitungssystems mit einem Rohrleitungsbogen,
- Figur 4: einen Teillängsschnitt durch einen dritten Teilbereich eines isolierten Rohrleitungssystems mit Armatur und
- Figuren 5a bis 5d: mit Hilfe von nach dem Baukastenprinzip dimensionierten Dämmkörpern isolierten Rohrleitungen.

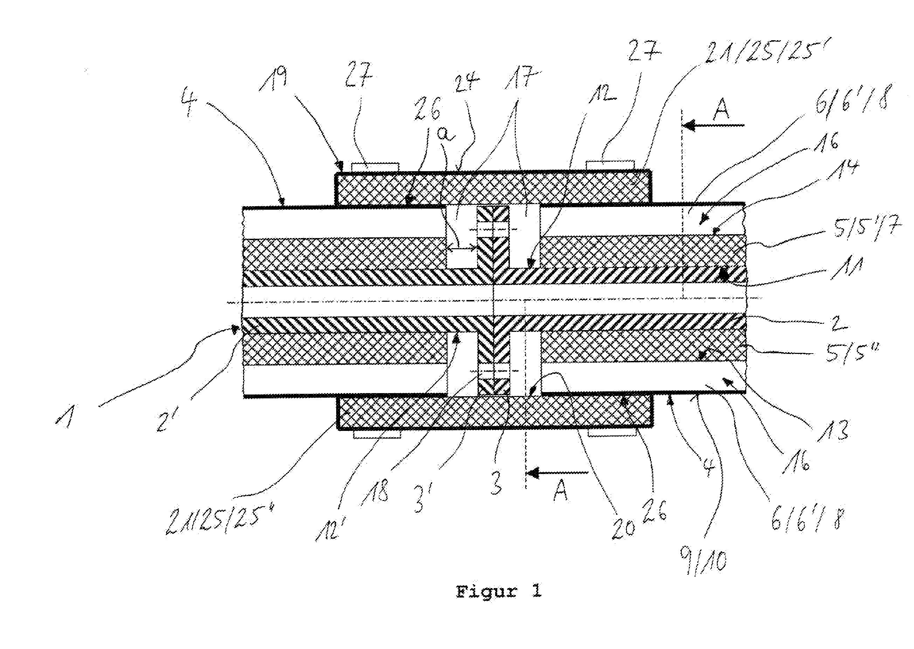

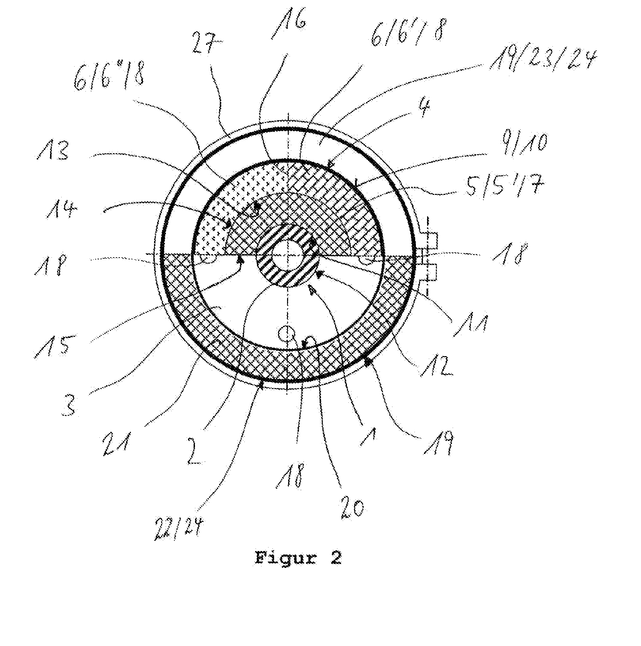

Ein Rohrleitungssystem 1 weist gemäß Figur 1 und 2 eine erste Rohrleitung 2 mit einem Flansch 3 und eine zweite Rohrleitung 2' mit einem Flansch 3' auf, wobei die Flansche 3, 3' aneinander liegen.

Die Rohrleitung 2 ist umgeben von einem Rohrleitungsdämmkörper 4, der aus einer inneren Schale 5 und einer äußeren Schale 6 gebildet ist. Die innere Schale 5 weist zwei symmetrische Halbschalen 5', 5" auf und besteht vollständig aus einer Dämmschicht 7. Die äußere Schale 6 weist ebenfalls zwei symmetrische Halbschalen 6', 6" auf. Sie wird aus einer Dämmschicht 8 und einer die äußere Mantelfläche 9 bildenden Schutzschicht 10 gebildet.

Die innere Schale 5 ist koaxial zur Rohrleitung 2 vorgesehen. Die beiden Halbschalen 5, 5' werden in radialer Richtung auf die Rohrleitung 2 aufgesetzt, so dass die Schale 5 zumindest mit ihrer Innenfläche 11 an der Außenfläche 12 der Rohrleitung 2 anliegt. Die äußere Schale 6 des Rohrleitungsdämmkörpers 4 ist koaxial zur Rohrleitung 2 und zur inneren Schale 5 vorgesehen und liegt mit der Innenfläche 13 an der Außenfläche 14 der inneren Schale 5 an. Die zwei Halbschalen 6', 6" der Außenschale 6 sind gegenüber den Halbschalen 5', 5" um 90° versetzt angeordnet. Auf diese Weise wird sichergestellt, dass die Fügekanten 15 der inneren Halbschale 5 nicht fluchtend zu den Fügekanten 16 der äußeren Schale 6 angeordnet sind.

Die zweite Rohrleitung 2' mit der Außenfläche 12' wird durch den baugleichen Rohrleitungsdämmkörper 4 isoliert.

Gleiche Bauteile und Oberflächen sind mit den gleichen Bezugsziffern versehen.

Der Rohrleitungsdämmkörper 4 reicht nicht bis an den Flansch 3, 3' der Rohrleitung 2, 2' heran. Er weist zum Flansch 3, 3' in Rohrleitungsrichtung einen Abstand a auf, so dass auf beiden Seiten des Flansches 3, 3' ein ringförmiger Luftspalt 17 entsteht. Innerhalb dieses Luftspalts 17 ist der Flansch 3 der Rohrleitung 2 mit dem Flansch 3' der Rohrleitung 2' verbunden, beispielsweise mittels einer nicht dargestellten Schraube, die durch die Bohrungen 18 geführt ist.

Der Flansch 3, 3' wird in radialer Richtung von einem koaxial zur Rohrleitung 2, 2' vorgesehenen Verbindungsdämmkörper 19 umschlossen, der in Rohrleitungsrichtung symmetrisch zu den Flanschen 3, 3' angeordnet ist und endseitig mit seiner Innenfläche 20 an der die äußere Mantelfläche 9 bilden Schutzschicht 10 des Rohrleitungsdämmkörpers 4 anliegt. Der Verbindungsdämmkörper 19 besitzt eine Dämmschicht 21 und eine eine äußere Mantelfläche 22 und eine äußere Stirnfläche 23 bildende Schutzschicht 24. Die Dämmschicht 21 und die Schutzschicht 24 bilden zusammen eine Schale 25 des Verbindungsdämmkörpers 19. Sie besteht - wie die innere Schale 5 und die äußere Schale 6 des Rohrleitungsdämmkörpers 4 - aus zwei symmetrischen Halbschalen 25', 25".

Indem der Verbindungsdämmkörper 19 endseitig an der äußeren Mantelfläche 9 des Rohrleitungsdämmkörpers 4 anliegt, entsteht die Anlagefläche 26. Dem Bereich der Anlagefläche 26 sind der Verbindungsdämmkörper 19 und der Rohrleitungsdämmkörper 4 mit Hilfe eines Spannrings 27 verbunden. Der Spannring 27 weist hierbei ein nicht dargestelltes Verbindungselement auf, beispielsweise einen Spannverschluss, die der Befestigung der Dämmkörper 4, 19 dient und gleichzeitig zerstörungsfrei geöffnet und wieder verschlossen werden kann. Hierdurch ist es beispielsweise möglich, den Verbindungsdämmkörper 19 zu entfernen und Zugang zu dem darunter liegenden Flansch 3, 3' zu erhalten.

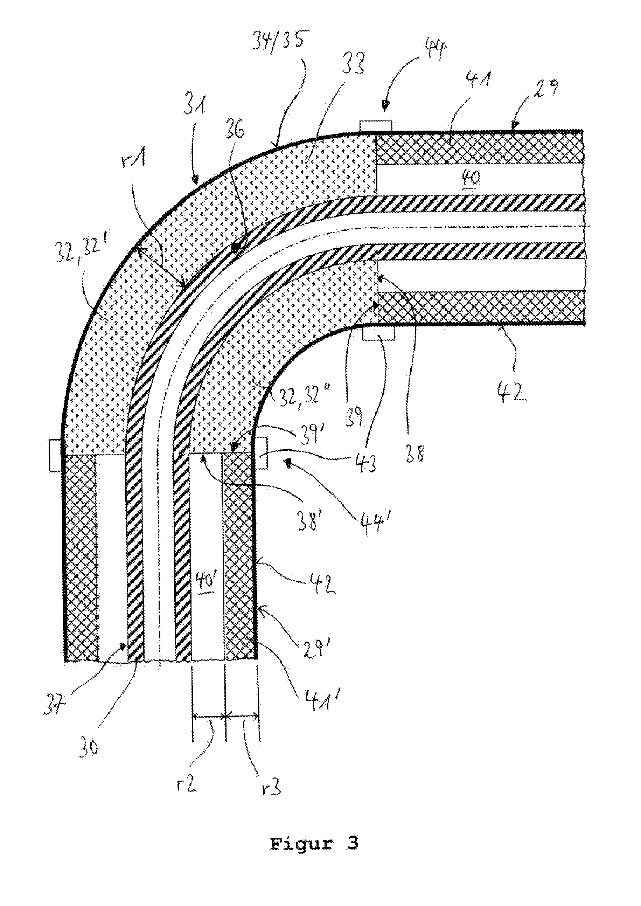

Zur Isolierung einer gebogenen Rohrleitung 30 werden gemäß Figur 3 zwei gerade Rohrleitungsdämmkörper 29, 29' sowie ein gebogener Rohrleitungsdämmkörper 31 vorgesehen. Die beiden geraden Rohrleitungsdämmkörper 29, 29' entsprechen in ihrem Aufbau dem Rohrleitungsdämmkörper 4 gemäß den Figuren 1 und 2. Der gebogene Rohrleitungsdämmkörper 31 besitzt eine einzige Schale 32 mit einer Dämmschicht 33 und einer von der äußeren Mantelfläche 34 gebildeten Schutzschicht 35. Die Schale 32 weist hierbei eine erste Halbschale 32' und eine zweite Halbschale 32" auf. Die Schale 32 liegt mit ihrer Innenfläche 36 auf der Außenfläche 37 der Rohrleitung 30 zumindest bereichsweise an.

Der gebogene Rohrleitungsdämmkörper 31 weist darüber hinaus zwei Stirnflächen 38, 38' auf. Die Stirnfläche 38 liegt flächig an der Stirnfläche 39 des geraden Rohrleitungskörpers 29 an. Analog liegt die Stirnfläche 38' des gebogenen Rohrleitungsdämmkörpers 31 flächig an der Stirnfläche 39' des geraden Rohrleitungsdämmkörpers 29' an. Die Rohrleitungsdämmkörper 29, 29' sind hierbei in einem 90°-Winkel zueinander in einer Ebene angeordnet.

Der Außendurchmesser des gebogenen Rohrleitungsdämmkörpers 31 entspricht dem Außendurchmesser der geraden Rohrleitungsdämmkörper 29, 29'. Insofern weist die Schale 31' des gebogenen Rohrleitungsdämmkörpers 31 eine radiale Stärke r1 auf, die der Summe der radialen Stärken r2 und r3 der beiden Schalen 40, 41 des Rohrleitungsdämmkörpers 29 und 40', 41' des Rohrleitungsdämmkörpers 29' entspricht. Im Bereich der Stirnflächen 38, 39 der Rohrleitungsdämmkörper 29, 31 ist auf der Schutzschicht 35 und einer zu dem geraden Rohrleitungsdämmkörper 29 gehörenden Schutzschicht 42 ein Klebeband 43 zum Schließen der Fügestelle 44 vorgesehen. In analoger Weise wird das Klebeband 43 zum Verschließen der Fügestelle 44' zwischen dem geraden Rohrleitungsdämmkörper 29' und dem gebogenen Rohrleitungsdämmkörper 31' verwendet.

Die Dämmschichten 7, 8, 21, 33 sind beispielsweise aus Polyurethan gebildet und weisen je nach Vernetzungsgrad eine Wärmeleitfähigkeit von etwa 0,029 W/mK (PUR) beziehungsweise etwa 0,035 W/mK (PIR) auf. Hierdurch wird - bezogen auf die gültigen Grenzwerte der Energieeinsparverordnung - eine Isolierung von 50 % beziehungsweise 100 % realisierbar. Die Schutzschicht 10, 24, 35, 42 besteht aus Aluminiumgrobkornmaterial und ist diffusionsdicht ausgebildet. Als Klebeband 43 wird beispielsweise ein Aluminiumklebestreifen vorgesehen, der geeignet ist, die Fügestellen 44, 44' diffusionsdicht zu verschließen, so dass die gesamte Isolierung des Rohrleitungssystems diffusionsdicht ausgeführt sein kann.

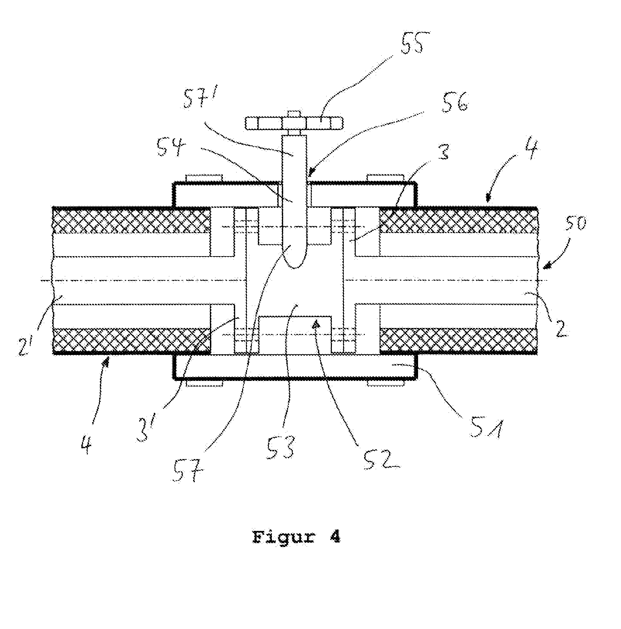

Ein alternatives Rohrleitungssystem 50 gemäß Figur 4 besteht im Wesentlichen aus zwei Rohrleitungen 2, 2' mit zwei Flanschen 3, 3', zwei baugleich ausgeführten Rohrleitungsdämmkörpern 4, einem Verbindungsdämmkörper 51 und einer Armatur 52. Der Verbindungsdämmkörper 51 entspricht hierbei in seinem Schichtaufbau dem Verbindungsdämmkörper 19 gemäß den Figuren 1 und 2. Die Armatur 52 ist zwischen den Flanschen 3, 3' verbaut und weist einen in Rohrleitungsrichtung liegenden Rohrleitungsabschnitt 53, einen im rechten Winkel zum Rohrleitungsabschnitt 53 vorgesehenen Querabschnitt 54 und ein Handrad 55 auf. Da das Handrad 55 von einem Benutzer bedient werden muss, muss dieses außerhalb der Isolierung des Rohrleitungssystems 50 vorgesehen sein. Zu diesem Zweck weist der Verbindungsdämmkörper 51 eine Aussparung 56 auf. Die Aussparung 56 ist in ihrer Größe auf den Durchmesser des Querabschnitts 54 derart zugeschnitten, dass dieser durch die Aussparung 56 aus dem Verbindungsdämmkörper 51 hinausgeführt werden kann. So ist der in Rohrleitungsrichtung vorgesehene Rohrleitungsabschnitt 53 der Armatur 52 sowie ein dem Handrad 55 abgewandter Teil 57 des Querschnitts 54 vom Verbindungsdämmkörper 51 umschlossen und isoliert. Ein dem Handrad 55 zugewandter Teil 57' des Querabschnitts 54 sowie das Handrad 55 sind außerhalb des Verbindungsdämmkörpers 51 vorgesehen und für den Benutzer frei zugänglich.

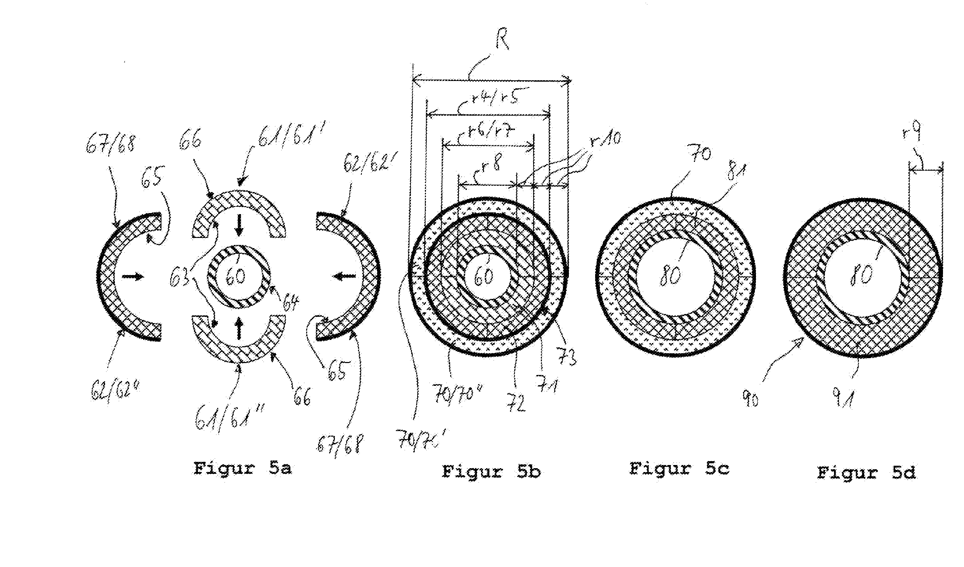

Die Vorteile der Verwendung von Dämmkörpern, die in ihrer Größe nach dem Baukastenprinzip dimensioniert bereitgestellt werden, verdeutlicht ein weiteres Ausführungsbeispiel. Eine Rohrleitung 60 wird gemäß Figur 5a mittels einer aus zwei Halbschalen 61', 61" bestehenden inneren Schale 61 und einer ebenfalls aus zwei Halbschalen 62', 62" bestehenden äußeren Schale 62 isoliert. Die Halbschalen 61', 62" der inneren Schale 61 werden hierzu zunächst in radialer Richtung auf die Rohrleitung 60 aufgebracht und liegen mit einer Innenfläche 63 an einer Mantelfläche 64 der Rohrleitung 60 zumindest abschnittsweise flächig an. Während der weiteren Montage werden die Halbschalen 62', 62'' der äußeren Schale 62 in Radialrichtung auf die innere Schale 61 aufgesetzt, so dass eine Innenfläche 65 derselben auf der Außenfläche 66 der inneren Schale 61 zumindest abschnittsweise flächig anliegen. Die äußere Schalen 62 weisen hierbei als eine Außenfläche 67 eine Schutzschicht 68 auf, durch die die Schalen 62 diffusionsdicht ausgebildet sind.

Die Rohrleitung 60 kann gemäß Figur 5b über eine dritte Schale 70 verfügen, die in bekannter Weise aus zwei Halbschalen 70', 70" gebildet wird. Die beiden inneren Schalen 71, 72 sind hierbei mit den Schalen 61, 62 identisch. Zusätzlich wird jedoch die dritte Schale 70 auf die eine Schutzschicht 73 aufweisende Schale 72 von außen aufgesetzt, beispielsweise um eine besser Isolierung zu realisieren oder den Außendurchmesser R einer isolierten Rohrleitung 60 vor einer Armatur oder dergleichen zu erhöhen. Das modulare Aufeinanderfügen der einzelnen Isolierschalen 70, 71, 72 ist hierbei nur möglich, wenn die Geometrie entsprechend aufeinander abgestimmt ist und der Innenradius r4 der äußeren Schale 70 dem Außenradius r5 der mittleren Schale 72 und der Innenradius r6 der mittleren Schale 72 auf den Außenradius r7 der inneren Schale 71 angepasst sind. Die innere Schale 71 ist ferner auf den Radius r8 der Rohrleitung 60 ausgelegt.

Ergänzend sind die Abmessungen der Schalen 70, 71, 72 auf die genormten Rohrleitungsdurchmesser abgestimmt. Eine Rohrleitung 80 gemäß Figur 5c weist hierbei eine zweischalige Isolierung auf. Die in der Rohrisolierung gemäß Figur 5b mittlere Schale 72 findet nunmehr als eine innere Schale 81 Verwendung. Die äußere Schale 70 wird in den Ausführungsbeispielen gemäß Figur 5b und Figur 5c identisch verwendet.

Ferner sei darauf hingewiesen, dass eine Schutzschicht 68 auch für eine innen liegende Schale 62 gemäß Figur 5b und 5c Verwendung finden kann und nicht auf außen liegende Schalen 70 beschränkt ist.

Weiterhin kann gemäß Figur 5d ein Rohrleitungsdämmkörper 90 als eine Schale 91 vorgesehen sein, die eine abweichende radiale Stärke r9 aufweisen. Sinnvollerweise wird die radiale Stärke r9 derart gewählt, dass diese ein ganzzahliges Vielfaches der radialen Stärke r10 der Schalen 70, 71, 72 darstellt. Auf diese Weise können die Dämmschalen 61, 62, 70, 71, 72, 81, 91 untereinander in einfacher Weise kombiniert werden.

## Patentansprüche

1. Vorrichtung zur Isolierung einer Rohrleitung (2, 2'), mit mindestens einem Rohrleitungsdämmkörper (4, 29, 29', 31, 90), der eine Rohrleitung (2, 2') im aufgesetzten Zustand des Rohrleitungsdämmkörpers (4, 29, 29', 31, 90) in Umfangsrichtung vollständig umschließt, wobei der Rohrleitungsdämmkörper (4, 29, 29', 31, 90) mindestens eine Schale (5, 6, 32, 40, 40', 41, 41', 62, 70, 71, 72, 81, 91) mit einer Dämmschicht (7, 8) aufweist wobei mindestens eine äußere Mantelfläche (9, 22) desselben als eine Schutzschicht (10, 24) ausgebildet ist, dass eine Anzahl von Verbindungsdämmkörpern (19, 51) zur Isolierung von Armaturen (52), Schellen, Verschraubungen und/oder Flanschen (3, 3') vorgesehen ist, wobei der Verbindungsdämmkörper (19, 51) mindestens eine Schale (25) mit einer Dämmschicht (21) aufweist und wobei zumindest eine äußere Mantelfläche (22) des Verbindungsdämmkörpers (19, 51) als eine Schutzschicht (24) ausgebildet ist, **dadurch gekennzeichnet,**
- **dass** die Rohrleitungsdämmkörper (4, 29, 29', 31, 90) und die Verbindungsdämmkörper (19, 51) als mindestens eine zweistückig ausgebildete Schale (5, 6, 32, 40, 40', 41, 41', 62, 70, 71, 72, 81, 91) ausgebildet sind, wobei die Schale (5, 6, 32, 40, 40', 41, 41', 62, 70, 71, 72, 81, 91) zwei symmetrische Halbschalen (5', 5", 6', 6", 25', 25", 32', 32", 61', 61", 62', 62", 70', 70") aufweist,
- **dass** die Rohrleitungsdämmkörper (4, 29, 29', 31, 90) und die Verbindungsdämmkörper (19, 51) aus einer Mehrzahl ineinandergelegter Schalen (5, 6, 32, 40, 40', 41, 41', 62, 70, 71, 72, 81, 91) bestehen und in einer Vielzahl aufeinander abgestimmter Größen nach dem Baukastenprinzip bereitgestellt sind, so dass die Rohrleitung (2, 2') in Rohrleitungsrichtung durchgehend gedämmt ist, wobei der Verbindungsdämmkörper im montierten Zustand desselben die Armaturen, Schellen, Verschraubungen und/oder Flansche (3, 3') zumindest abschnittsweise umschließt und zumindest bereichsweise an der äußeren Mantelfläche (9, 22) des Rohrleitungsdämmkörpers (4, 29, 29', 31, 90) anliegt zur Bildung einer Überlappung.

2. Vorrichtung nach Anspruch 1, **dadurch gekennzeichnet, dass** der Rohrleitungsdämmkörper (4, 29, 29', 31, 90) und/oder der Verbindungsdämmkörper (19, 51) Aussparungen (56) für Bedien- und/oder Anzeigeelemente (52) aufweisen.

3. Vorrichtung nach Anspruch 1 oder 2, **dadurch gekennzeichnet, dass** zur Isolierung eines Rohrbogens (30) ein gebogener Rohrleitungsdämmkörper (31) mit zwei Stirnflächen (38, 38') vorgesehen ist, wobei eine erste Stirnfläche (38) des gebogenen Rohrleitungsdämmkörpers (31) flächig an einer Stirnfläche (39) eines ersten benachbarten Rohrleitungsdämmkörpers (29) und eine zweite Stirnfläche (38') des gebogenen Rohrleitungsdämmkörpers (31) flächig an einer Stirnfläche (39') eines zweiten benachbarten Rohrleitungsdämmkörpers (29'), der zu dem ersten benachbarten Rohrleitungsdämmkörper (29) in einem Winkel vorgesehen ist, anliegt.

4. Vorrichtung nach Anspruch 3, **dadurch gekennzeichnet, dass** der Außendurchmesser des gebogenen Rohrleitungsdämmkörpers (31) dem Außendurchmesser des ersten benachbarten Rohrleitungsdämmkörpers (29) und dem Außendurchmesser des zweiten benachbarten Rohrleitungsdämmkörpers (29') entspricht.

5. Vorrichtung nach einem der Ansprüche 1 bis 4, **dadurch gekennzeichnet, dass** die wenigstens eine Dämmschicht (7, 8, 32) des Rohrleitungsdämmkörpers (4, 29, 29', 31, 90) und/oder die Dämmschicht (21) des Verbindungsdämmkörpers (19, 51) aus Polyurethan besteht.

6. Vorrichtung nach einem der Ansprüche 1 bis 5, **dadurch gekennzeichnet, dass** die Schutzschicht (10, 35, 68, 73) des Rohrleitungsdämmkörpers (4, 29, 29', 31, 90) und/oder die Schutzschicht (24) des Verbindungsdämmkörpers (19, 51) aus nicht brennbarem Aluminiumgrobkornmaterial besteht.

7. Vorrichtung nach einem der Ansprüche 1 bis 6, **dadurch gekennzeichnet, dass** der Rohrleitungsdämmkörper (4, 29, 29', 31, 90) und/oder der Verbindungsdämmkörper (19, 51) diffusionsdicht ausgebildet sind.

8. Vorrichtung nach einem der Ansprüche 1 bis 7, **dadurch gekennzeichnet, dass** zum Fixieren des Rohrleitungsdämmkörpers (4, 29, 29', 31, 90) und/oder des Verbindungsdämmkörpers (19, 51) dieselben umfassende Spannringe (27) und/oder Spannverschlüsse verwendbar sind.

9. Vorrichtung nach einem der Ansprüche 1 bis 8, **dadurch gekennzeichnet, dass** die Stoß- und Schnittkanten (44, 44') des Rohrleitungsdämmkörpers (4, 29, 29', 31, 90) und/oder des Verbindungsdämmkörpers (19, 51) mit Hilfe von Aluminiumklebestreifen (43) diffusionsdicht verarbeitbar sind.

## Claims

1. A device for isolating a conduit (2, 2') having at least one conduit insulating component (4, 29, 29', 31, 90) which completely encloses a conduit (2, 2') in the installed condition in the circumferential direction, wherein the conduit insulating component (4, 29, 29', 31, 90) comprises at least one shell (5, 6, 32, 40, 40', 41, 41', 62, 70, 71, 72, 81, 91) having an insulating layer (7, 8), wherein at least one external jacket surface (9, 22) of the same is configured as a protective layer (10, 24), wherein a number of connecting insulating components (19, 51) are provided to isolate valves (52), clamps, screwed joints and/or flanges (3, 3'), wherein the connecting insulating component (19, 51) comprises at least one shell (25) having an insulating layer (21) and wherein at least one external jacket surface (22) of the connecting insulating component (19, 51) is configured as a protective layer (24), **characterized in that**
- the conduit insulating components (4, 29, 29', 31, 90) and the connecting insulating components (19, 51) are configured as at least one shell (5, 6, 32, 40, 40', 41, 41', 62, 70, 71, 72, 81, 91) which is configured in two pieces, wherein the shell (5, 6, 32, 40, 40', 41, 41', 62, 70, 71, 72, 81, 91) comprises two symmetrical half-shells (5', 5", 6', 6", 25', 25", 32', 32", 61', 61", 62', 62", 70', 70"),
- the conduit insulating components (4, 29, 29', 31, 90) and the connecting insulating components (19, 51) consist of a plurality of shells placed inside one another (5, 6, 32, 40, 40', 41, 41', 62, 70, 71, 72, 81, 91) and are provided in a variety of coordinated sizes according to the modular principle, so that the conduit (2, 2') is continuously insulated in the direction of the conduit, wherein
- the connecting insulating component, in the installed condition, encloses the valves, clamps, screwed joints and/or flanges (3, 3') at least in sections and rests at least in areas on the external jacket surface (9, 22) of the conduit insulating component (4, 29, 29', 31, 90) in order to form an overlap.

2. The device according to Claim 1, **characterized in that** the conduit insulating component (4, 29, 29', 31, 90) and/or the connecting insulating component (19, 51) comprise(s) recesses (56) for operating and/or display elements (52).

3. The device according to Claim 1 or 2, **characterized in that** in order to isolate a pipe bend (30) a curved conduit insulating component (31) having two faces (38, 38') is provided, wherein a first face (38) of the curved conduit insulating component (31) rests in a planar manner on one face (39) of a first adjacent conduit insulating component (29) and a second face (38') of the curved conduit insulating component (31) rests in a planar manner on a face (39') of a second adjacent conduit insulating component (29') which is provided at an angle to the first adjacent conduit insulating component (29).

4. The device according to Claim 3, **characterized in that** the external diameter of the curved conduit insulating component (31) corresponds to the external diameter of the first adjacent conduit insulating component (29) and the external diameter of the second adjacent conduit insulating component (29').

5. The device according to any one of Claims 1 to 4, **characterized in that** the at least one insulating layer (7, 8, 32) of the conduit insulating component (4, 29, 29', 31, 90) and/or the insulating layer (21) of the connecting insulating component (19, 51) consist(s) of polyurethane.

6. The device according to any one of Claims 1 to 5, **characterized in that** the protective layer (10, 35, 68, 73) of the conduit insulating component (4, 29, 29', 31, 90) and/or the protective layer (24) of the connecting insulating component (19, 51) consist(s) of non-combustible aluminum coarse grain material.

7. The device according to any one of Claims 1 to 6, **characterized in that** the conduit insulating component (4, 29, 29', 31, 90) and/or the connecting insulating component (19, 51) is/are configured to be diffusion-resistant.

8. The device according to any one of Claims 1 to 7, **characterized in that**, in order to fix the conduit insulating component (4, 29, 29', 31, 90) and/or the connecting insulating component (19, 51), clamping rings (27) comprising the same and/or tension locks can be used.

9. The device according to any one of Claims 1 to 8, **characterized in that** the impact and cut edges (44, 44') of the conduit insulating component (4, 29, 29', 31, 90) and/or of the connecting insulating component (19, 51) can be processed in a diffusion-resistant manner with the aid of adhesive aluminum strips (43).

## Revendications

1. Dispositif d'isolation d'un système de conduite tubulaire (2, 2') avec au moins un corps d'isolation de conduite (4, 29, 29', 31, 90) qui enveloppe complètement, dans la direction périphérique, une conduite tubulaire (2, 2') implantée, sachant que ledit corps d'isolation de conduite (4, 29, 29', 31, 90) présente au moins une coque (5, 6, 32, 40, 40', 41, 41', 62, 70, 71, 72, 81, 91) pourvue d'une couche isolante (7, 8), sachant qu'au moins une surface latérale, extérieure (9, 22) de celui-ci est réalisée en forme de surface de protection (10, 24), que plusieurs corps d'isolation de liaisons (19. 51) sont pourvus d'au moins une coque (25) doté d'une couche d'isolation (21) et sachant qu'au moins une surface latérale, extérieure (22) du corps d'isolation de liaisons (19. 51) est réalisée en tant que couche de protection (24),
**caractérisé en ce que**
le corps d'isolation de conduite (4, 29, 29', 31, 90) et le corps d'isolation de liaisons (19. 51) est réalisé sous la forme d'au moins une coque (5, 6, 32, 40, 40', 41, 41', 62, 70, 71, 72, 81, 91) formée de deux pièces, sachant que la coque (5, 6, 32, 40, 40', 41, 41', 62, 70, 71, 72, 81, 91) présente deux demi-coques symétriques,
le corps d'isolation de conduite (4, 29, 29', 31, 90) et le corps d'isolation de liaisons (19. 51) consistent en une pluralité de coques (5, 6, 32, 40, 40', 41, 41', 62, 70, 71, 72, 81, 91), emboîtées les unes dans les autres, et qu'ils sont offerts dans une pluralité de grandeurs adaptées les unes aux autres selon le principe de construction modulaire de sorte que la conduite tubulaire (2, 2') est isolée en continu dans la direction de ladite conduite tubulaire, sachant que le corps d'isolation de liaisons, à l'état monté, entoure, au moins par sections, les ferrures, les colliers, les liaisons par vis et / ou les brides (3, 3'), et porte, au moins par sections, contre la surface latérale extérieure (9, 22) du corps d'isolation de conduite (4, 29, 29', 31, 90) pour former un chevauchement.

2. Dispositif selon la revendication 1, **caractérisé en ce que** le corps d'isolation de conduite (4, 29, 29', 31, 90) et / ou le corps d'isolation de liaisons (19. 51) présentent des évidements (56) pour des éléments de commande et / ou d'affichage (52).

3. Dispositif selon revendication 1 ou 2, **caractérisé en ce que**, pour l'isolation d'un coude tubulaire (30), est prévu un corps d'isolation de conduite tubulaire coudé (31) doté de deux faces frontales (38, 38'), sachant qu'une première face frontale (38) du corps d'isolation de conduite tubulaire coudé (31) porte en nappe contre une face frontale (39) d'un premier corps d'isolation de conduite voisin (29) et qu'une deuxième face frontale (38') du corps d'isolation de conduite tubulaire coudé (31) porte en nappe contre une face frontale (39') d'un deuxième corps d'isolation de conduite voisin (29') qui est prévu angulairement par rapport au premier corps d'isolation de conduite (29).

4. Dispositif selon la revendication 3, **caractérisé en ce que** le diamètre extérieur du corps d'isolation de conduite tubulaire coudé (31) correspond au diamètre extérieur du premier corps d'isolation de conduite voisin (29) et au diamètre extérieur du deuxième corps d'isolation de conduite voisin (29').

5. Dispositif selon l'une des revendications 1 à 4, **caractérisé en ce que** la couche d'isolation (7, 8, 32) du corps d'isolation de conduite tubulaire (4, 29, 29', 31, 90), qui est au moins prévue, et / ou la couche d'isolation (21) du corps d'isolation de liaisons (19. 51) consistent en polyuréthane.

6. Dispositif selon l'une des revendications 1 à 5, **caractérisé en ce que** la couche de protection (10, 35, 68, 73) du corps d'isolation de conduite tubulaire (4, 29, 29', 31, 90) et / ou la couche de protection (24) du corps d'isolation de liaisons (19. 51) consistent en matériau d'aluminium à gros grains incombustible.

7. Dispositif selon l'une des revendications 1 à 6, **caractérisé en ce que** le corps d'isolation de conduite tubulaire (4, 29, 29', 31, 90) et / ou le corps d'isolation de liaisons (19. 51) sont de conception étanche à la diffusion.

8. Dispositif selon l'une des revendications 1 à 7, **caractérisé en ce que**, pour la fixation du corps d'isolation de conduite tubulaire (4, 29, 29', 31, 90) et / ou du corps d'isolation de liaisons (19. 51), peuvent être utilisé des bagues de serrage (27) et / ou des fermetures par serrage.

9. Dispositif selon l'une des revendications 1 à 8, **caractérisé en ce que** les bords de jointoiement et de coupe (44, 44') du corps d'isolation de conduite tubulaire (4, 29, 29', 31, 90) et / ou du corps d'isolation de liaisons (19. 51) peuvent être rendus étanches à la diffusion à l'aide de bandes adhésives en aluminium (43).
